# EUROPEAN PATENT APPLICATION

(11) **EP 3 492 361 A1**
(43) Date of publication of application: **05.06.2019**
(21) Application number: 18163995.6
(22) Date of filing: 26.03.2018
(51) Int. Cl.: B62K 25/28, F16F 9/54, F16F 9/56

(54) **LEVEL ADJUSTMENT FOR MOTORCYCLES**

(30) Priority: 01.12.2017 EP 17205026
(71) Applicant: Müller, Werner, 86669 Königsmoos (DE)
(72) Inventor: Müller, Werner, 86669 Königsmoos (DE)
(74) Representative: Stellbrink & Partner Patentanwälte mbB

(57) **Abstract**

A kit (10) for a shock absorber, the kit (10) comprising a spring-plate (100), a thread-adapter (300) and a strut-eye (400). The kit (10) can further comprise at least one distance-washer (200).

## Description

The present invention is directed to a kit for a level adjustment for motorcycles and components thereof.

### Background

The level adjustment for motorcycles is a wide spread desire since long. Not just esthetical preferences cause this development, but also pure necessities like better cross-country abilities or an improved road-ability dependent from the application.

JP 03,456,796 B2 describes the riding height of the motorcycle that is adjustable via a movable support (28) for the rear wheel mounting. For a simple control the height is reduced at fast road speeds and is at maximum during starting. Two speed limits are provided by the control to set the start of height increase or lowering. The riding height control takes into account the dynamic changes in the motorcycle speed, i.e. braking and acceleration as well as the dynamic response of the adjustment and that of the control system to generate optimum control signals for the riding height control for maximum comfort and stability.

CN 104,071,288 B makes changes to the shock absorbers for the vehicle height adjusting device for a motorcycle, the device comprising a damper-side electronic control unit, the damper-side electronic control unit connected to a vehicle network in the vehicle network. vehicle-mounted electronic control unit and a vehicle operating state detecting sensor mounted on a vehicle connected to each other, wherein attached to the shock absorber-side electronic control unit of the absorber using the vehicle height detecting unit of detecting result and the vehicle operating state detecting sensor detecting result to calculate the vehicle height change to be adjusted in the shock absorber. and controlling the switching valve based on the calculated vehicle height change to regulate the height of the vehicle.

A hydraulic device is disclosed by Suzuki with EP 544 649 B1, a motorcycle having a body height adjustor in which a body height adjusting unit transmits the hydraulic pressure of a pressure fluid in the rear cushion unit simultaneously to hydraulic jacks of the rear cushion unit and the front suspension units to change the lengths of front suspensions and a rear cushion unit and to thereby adjust the body height. The body height adjusting unit is disposed on the side of the body frame remote from the exhaust pipe. A hose connector for connecting the body height adjusting unit and the hydraulic jacks of the front suspensions is disposed at the rear of the front suspension and in front of the body height adjusting unit. The hydraulic hoses are laid along a line corresponding to the center of the front fork in the widthwise direction. A blow valve incorporated in the body height adjusting unit is opened by the operation of turning OFF the ignition switch to forcibly set the motorcycle body to a lower position. The position of a body height changeover valve incorporated in the body height adjusting unit is detected to indicate the present body height by a body height position indicator, or a see-through window is formed in the casing of the hydraulic jack of the rear cushion unit to enable the rider to confirm the body height.

JP 06,012,372 B2 offers a different approach where the vehicle height adjustment unit can be provided with damper, the occupancy space and weight of vehicle height adjusting device can be made small, and the cost reduction of device can be achieved effectively. The vehicle height can be lowered in a short time until a vehicle stops, and the stability of device can be ensured. The support capability of the suspension spring with respect to damper for spring-bearing load can be improved effectively.

### Summary

It is the object of the present invention to provide an improved, more compact and/or custom-made level and is attained with the subject matter according to the respective claims.

The present invention provides a new and/or alternate device and/or method to allow a motor cyclist to adapt his or her motorcycle to specific needs. It's intended to modify the shock absorber in a way to allow adjustments of the distance between the road surface and the chassis of a motorcycle.

The disclosed kit of elements according to the claims allows a modified level of the chassis of a motorcycle to the rear wheel respective to the mechanism supporting the rear wheel. The appropriate part of the motorcycle can be addressed as shock-absorber-rear or more generally, a shock-absorber.

The disclosed kit further permits the use of many pieces of the original shock-absorber assembly, specifically the spring itself. The use of as many as possible original parts allows to be covered by the guarantee of the producer.

The disclosed kit can comprise a spring-plate for a shock absorber, the spring-plate being configured as a strut mount comprising a thread to be attached to a spring-strut and further supporting and/or biasing a spring. That is, the spring-plate is holding the spring at one end while the spring is also held at the opposite end next to the body of the shock absorber. The thread of this spring-plate can be matching the factory-set thread of the original shock-absorber-rear. Whereas the modified spring-plate can be thinner than the original spring-plate it can comprise a higher quality of material, such as a high-performance steel, titanium or any material with a tensile strength of at least 500 N/mm². However, any other material withstanding the forces acting on such a rear shock absorber can be applied.

The spring-plate can be shaped so that a spring supporting the shock absorber can rest securely. The spring-plate disclosed may shorten the distance between the body of the shock absorber by approximately 30-45%, which would usually cause a higher stiffness of the driving emotion to an extent that could not be accepted by the driver. Therefore, the shape of the spring-plate permits the spring to extend a bit further, thus allowing a moderately stiffer driving emotion than original. The actual reduction of the length of the spring by compression can be assumed to be 10-20%.

Due to the slim construction of the spring-plate and due to the higher compression of the spring, the material used for this spring plate may be chosen stronger, taking into account that high performance motorcycles may carry out heavy duties and the forces acting onto the shock-absorbers can be immense. Usually, steel may be taken for the construction of such a spring plate, however other high-performance material may be used, such as titanium and/or a high-performance aluminum. A tensile strength of 650 N/mm² can be considered, however, less stable material may be considered under other conditions.

The spring associated with the shock absorber on the distal side rests in a provision integrated in the body of the factory provided shock absorber. However, to adjust the pre-tension of the spring, a further ring may be provided that can bias and/or center the spring at the distal side of the spring. The spring-plate disclosed can be constructed to support and/or bias the proximal side of the spring, this support and/or bias forming the distal side of the spring-plate. The construction can be carried out as a ring-shaped shoulder having a diameter corresponding to the measures of the factory provided spring. The force provided by the spring can be biased by a plate like part of the spring-plate, in this document addressed as a ring-shaped shoulder.

The spring plate can be configured to comprise two separate parts that can be length-adjusted to each other. Thus, an adjustment of the pre-tension of the spring may be accomplished without the necessity to disassemble the shock-absorber in cases where a variable stiffness of the motor-cycle is required by a user. The pre-tension of the spring being of reasonable strength, a further ring may be supplied to prevent the sometimes sharp edges of a spring to cut into the spring-plate.

On the proximal side of the spring-plate a circular or ring-shaped excavation can be provided for; it can comprise a plurality of ring-shaped portions. The dimensions can, in the case of the inner portion, correspond to the dimension of the factory defined spring-strut. A slightly larger diameter can be provided for. Thus, in case if the spring-strut has a thread comprising an M14 dimension, the minimum diameter of the recess may be M15 mm, but a higher tolerance may be applied. Further, in case the thread of the spring-plate is dimensioned to comprise a longer thread length, it can even be a stepped recess.

The outer portion of the excavation may be provided for supporting and biasing distant-washers as disclosed below. The outer diameter of the excavation may extend to approximately 40 to 41 mm, however differing measures can be applied under circumstances caused by the dimensioning of the below disclosed further members of the kit.

The spring-plate can be threaded (or screwed) onto the thread of the spring-strut up to the end of the factory supplied thread; however, even a defined distance to this end of the thread may be allowed for.

A thread-adapter can then be threaded onto the spring-strut and counter the spring-plate. The spring-plate and the thread-adapter can be configured to comprise means to allow a tool to be applied to enable the person assembling the kit to ensure a firm, secure countering and thus inhibiting the spring-plate and/or the thread-adapter to move further to the distal and/or to the proximal direction of the spring-strut. Thus, the thread-adapter comprises an inner thread corresponding the thread on the spring-strut.

The thread-adapter can further comprise an outer thread configured to engage with a strut-eye disclosed below. The dimensioning of such an outer thread may be around M24 or a corresponding other industry standard thread comprising comparable technical features. Further a fine-thread may be applied, which on the one hand can supply stronger abutment and/or a finer variability to adjust the effective length of the spring-strut.

The thread-adapter may have different overall axial lengths, extending from a minimum of approx. 10 mm to a maximum axial length of some 40 mm, wherein 16mm can be considered as a usual axial length. For a larger range of variation longer embodiments can be arranged, such as 25 mm or 30 mm. The higher the value of the effective axial length of the spring-strut is selected, the higher the motorcycle may be elevated over the factory-set level. The shorter the spring-strut, the lower the level of the motorcycle is adjusted.

A strut-eye can be engaged to the thread-adapter, the inner thread of the strut-eye configured to engage the outer thread of the thread-adapter. Whereas M24 can be assumed, even higher or slightly lower dimensions can be provided. The strut-eye may comprise an eye having a diameter of approx. 23 mm, however the factory-set dimension should be met accordingly. The range of such diameters may vary from 20 to 28 mm.

The strut-eye may be configured to form one integral part with the thread-adapter, then becoming a strut-eye with an inner measure for the thread corresponding to the thread on the spring-strut as one integral part.

If the thread-adapter (or the integral assembly of the thread-adapter with the strut-eye) is threaded to the spring-plate without a gap, the effect to the motorcycle has already be explained to lower the level to a maximum, in other words, the motorcycle will be in the lowest level to be achieved with the present invention.

To permit a variety of lowering levels of the motorcycle, a configuration of (a) distance-washer(s) may be applied. By applying one or more distance-washers, the strut-eye will move further to the proximal direction and in the effect, elongate the effective length of the spring-strut. Depending on the thickness of these distance-washers, steps may be applicable, however, as the thickness of the distance washers may comprise various dimensions, the lengths of the spring-strut may vary. The diameters of the distance-washers may for the inner diameter range approximately around 23 mm with an outer diameter around 40 mm, matching the corresponding measures of the excavation of the spring-plate.

The distance-washer may form an integral part together with the strut-eye and the thread-adapter and can then be addressed as a specific strut-eye. The strut-eye in such a configuration may comprise an inner thread configured to engage the thread of the spring-strut and further comprise a ring-shaped spacer, all integrated and thus form one device to comprise the functions of the strut-eye, the thread-adapter and the distance-washer(s).

The prior disclosed elements may be adapted to form a kit to enable the client to fit the parts together to achieve the desired function, i.e. the elongation and/or the shortening of the spring-strut. The kit may comprise the spring-plate, the thread-adapter and the strut-eye, wherein it should be understood that the integrated devices described above may also be contained in a kit. Further, and usually, such a kit may comprise the at least one distance washer(s).

Further disclosed is a method to assemble the members of the kit that can comprise the steps of threading (i.e. screwing) a spring-plate onto the thread of the spring-strut, further the step of threading a thread-adapter onto the thread of the spring-strut and counter it to the spring-plate. A further step may comprise the threading of a strut-eye onto the outer thread of the thread-adapter.

Further the method is disclosed to apply at least one distance-washer between the spring-plate and the strut-eye.

It should be noted that the integral portions comprising the strut-eye and the thread-adapter can be threaded (i.e. screwed) and/or countered onto the thread of the spring-strut.

It should also be noted that the integral portions comprising the strut-eye, the thread-adapter and the distance-washer can be threaded (i.e. screwed) and/or countered onto the thread of the spring-strut.

The shock-absorber may further be assembled in one part and comprises at least one of a shock-absorbing strut, a thread of a shock-absorbing strut, a spring-plate as disclosed and a strut-eye. Further, the shock-absorber assembly may comprise a combination wherein the strut-eye and a thread adapter can be formed integrally or a further integral form of the strut-eye with the thread-adapter and the at least one distance washer.

### Brief descriptions of the figures

**Fig. 1** depicts the modified shock absorber in an explosion view.
**Fig. 2** depicts a detailed view of a spring plate.
**Fig. 3** depicts a part explosion view of an embodiment of a modified shock absorber.
**Fig. 4** depicts a schematic aspect of an adjustable spring-plate.

### Description of various embodiments

In the following, exemplary embodiments of the invention will be described, referring to the figures. These examples are provided to provide further understanding of the invention, without limiting its scope.

In the following description, a series of features and/or steps are described. The skilled person will appreciate that unless required by the context, the order of features and steps is not critical for the resulting configuration and its effect. Further, it will be apparent to the skilled person that irrespective of the order of features and steps, the presence or absence of time delay between steps, can be present between some or all of the described steps. Any features described and claimed in connection with the device claims are also applicable to the method claims and to be understood as respective method steps and vice versa.

The term "and/or" intends to embrace each alternative alone or any kind of combination of the alternatives listed. An "and/or" before the last member of a list of alternatives is to be understood to as being in-between each of the members of the list.

As used herein, including in the claims, singular forms of terms are to be construed as also including the plural form and vice versa, unless the context indicates otherwise. Thus, it should be noted that as used herein, the singular forms "a", "an" and "the" include plural references unless the context clearly dictates otherwise.

Throughout the description and claims, the terms "comprise", "including", "having", and "contain" and their variations should be understood as meaning "including but not limited to" and are not intended to exclude other components.

The present invention also covers the exact terms, features, values and ranges etc. in case these terms, features, values and ranges etc. are used in conjunction with terms such as about, around, generally, substantially, essentially, at least etc. (i.e., "about 3" shall also cover exactly 3 or "substantially constant" shall also cover exactly constant).

The term "at least one" should be understood as meaning "one or more", and therefore includes both embodiments that include one or multiple components. Furthermore, dependent claims that refer to independent claims that describe features with "at least one" have the same meaning, both when the feature is referred to as "the" and "the at least one".

It will be appreciated that variations to the foregoing embodiments of the invention can be made while still falling within the scope of the invention. Alternative features serving the same, equivalent or similar purpose can replace features disclosed in the specification, unless stated otherwise. Thus, unless stated otherwise, each feature disclosed represents one example of a generic series of equivalent or similar features.

Use of exemplary language, such as "for instance", "such as", "for example" and the like, is merely intended to better illustrate the invention and does not indicate a limitation on the scope of the invention unless so claimed. Any steps described in the specification may be performed in any order or simultaneously, unless the context clearly indicates otherwise.

All of the features and/or steps disclosed in the specification can be combined in any combination, except for combinations where at least some of the features and/or steps are mutually exclusive. In particular, preferred features of the invention are applicable to all aspects of the invention and may be used in any combination.

The same reference numerals used for different embodiments are intended to identify parts or features of different embodiments with the same or similar function. In case the same reference numerals are not identified in other embodiments, this is by no means intended to mean that the corresponding features designated by these reference numerals are not present.

The threads mentioned shall be understood to be obeying different industry standards as long as the technical effect is achieved comparably.

The expression "mechanic" or"craftsman" shall describe a person and/or provision that carries out a mechanical manipulation with a tool and/or an element of the kit.

A spring strut is the rod extending from a pressure tube to the proximal end and usually carries a mounting device. The spring strut can also be addressed as piston rod or as a plunger rod. The mounting device can further be addressed as attachment point or a spring-eye.

As a ring-shoulder annular the part of a shock absorber is meant that supports and/or biases a spring.

Where a proximal side is referenced it is meant to be the side closer to the disclosed strut-eye.

Where a distal side is referenced it is meant to be the side distal to the disclosed strut-eye.

### Description of the figures

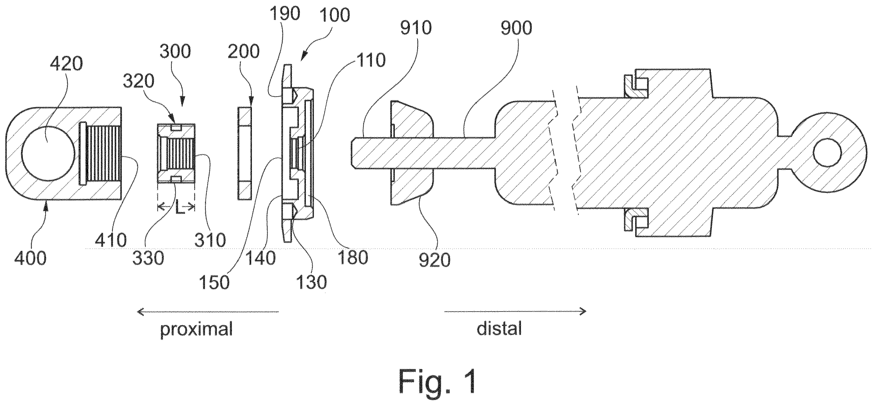

**Fig. 1** depicts an explosion view of the assembled embodiment of a shock absorber with the elements of a kit as disclosed. The distal end shows the body of a shock absorber ending in a rod 900, also addressed as spring-strut 900 with a spring-strut-thread 910. The part 920 is a rubber device to prevent the shock absorber from emitting noise.

The spring-plate 100 can be threaded with the thread 110 onto the spring-strut 910. A ring-shaped shoulder 130 is provided to support and bias the spring (not depicted). The recess **140, 150** can be shaped stepwise. While the deeper recess **140** is intended to support and bias a distance-washer, the stepped recess **150** can support the thread **110** to be longer and thus being capable to bias stronger forces. Recess **180** allows the spring-plate **100** to move closer to the distal end (and thus closer to the body of the shock absorber).

At least one tool-recess or bore **190** is shown that allows the spring-plate **100** to be held firm with a tool when the mechanic counters the spring-plate **100.**

Further depicted is one distance-washer **200** provided to fit into the recess **140** of the spring-plate **100**. Further, no distance-washer **200** or a selected number of distance-washers **200** can be applied. Additionally, or alternatively, a spacer bushing **200** or a spacer sleeve **200** can be provided.

Element **300** is a thread-adapter comprising length **L** with an inner thread **310** configured to engage to the thread **910** and counter spring-plate **100**. An outer thread **320** is shown configured to engage with the inner thread **410** of strut-eye **400**. Gap **330** can be provided to permit the mechanic to apply a strong counter force once countering against the spring-plate **100**.

Strut-eye **400** comprises an inner thread **410** configured to engage with the outer thread **320** of the thread-adapter **300**. Further, the strut-eye **400** comprises an eye or a bore **420** to be engaged with the frame of the motorcycle (not depicted).

Ring **930** can bias and center the distal portion of a spring (not depicted).

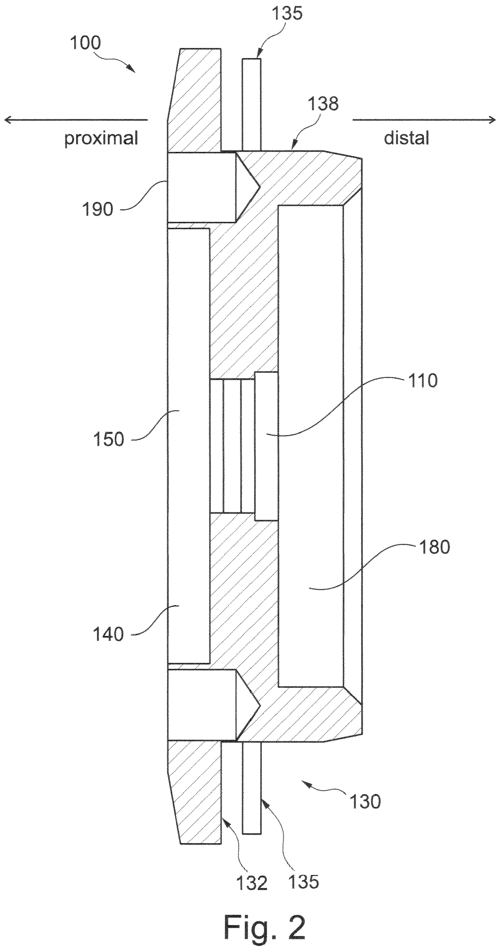

**Fig. 2** depicts a detailed view of a spring-plate **100**. The ring-shaped shoulder **130** is provided to support and bias a spring (not depicted). The recess **140, 150** in this embodiment is not stepped as shown in **Fig. 1** to illustrate a variation of the shape of the recess **140, 150** in the spring-plate **100**. Recess **180** allows the spring-plate **100** to move closer to the distal end (and thus closer to the body of the shock absorber).

Thread **110** is configured to engage with the thread at the end of spring-strut-thread (not depicted, see **910** in **Fig. 1**).

Further, tool-recess **190**, which is shown in this figure, can comprise more than one location(s). A special tool is needed to fit into the tool-recess(es).

Ring **135** may be supplied to make the adjustment of the spring plate 100 against the force of a spring (not depicted) easier.

The ring-shaped shoulder **130** can be described as the part **132** that can bias a spring force and the part **138** that centers a spring (not depicted).

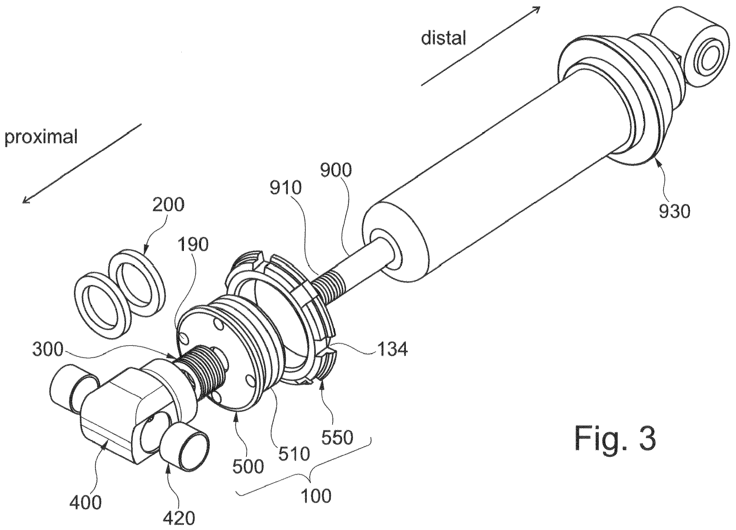

**Fig. 3** depicts an embodiment of a shock absorber in an explosion view. The distal end shows the body of a shock absorber ending in a rod **900**, also addressed as spring-strut **900** with a spring-strut-thread **910**. The part **930** is a ring or washer that biases and centers a spring (not depicted).

The spring-plate **100** is formed of two parts (**500, 550**) that are engaged with one another by a thread **510**. Nut **500** can engage with spring-strut-thread **910** while coupling-ring **550** biases and centers the spring (not depicted).

A tool-recess **190** is shown that allows the nut **500** to be held firm with a tool. This may be needed when the mechanic counters the nut **500** against the thread adapter **300** on the spring-strut-thread **910**. Coupling-ring **550** also has at least one recess or bore **134** that is needed to adjust the coupling-ring **550** to stress and/or prestress the spring (not depicted).

Further depicted is an optional distance-washer **200** provided to fit between the strut-eye **400** and the nut **500**. Such a ring **200** can be applied to adjust the distance between the strut-eye **400** to the nut **500**. Additionally, or alternatively, a spacer bushing **200** or a spacer sleeve **200** can be provided.

Element **300** is a thread-adapter with an inner thread configured to engage to the spring-strut-thread **910** and counter spring-plate **100**. An outer thread **320** is shown configured to engage with the inner thread (see **Fig. 1**) of strut-eye **400**. Gap or recess **330** can be provided to permit the mechanic to apply strong counter force once countering against the spring-plate **100**.

Strut-eye **400** comprises an inner thread (see **Fig. 1**) configured to engage with the outer thread **320** of the thread-adapter **300**. Further, the strut-eye **400** comprises an eye or a bore **420** to be engaged with the frame of the motorcycle (not depicted).

Ring **930** can bias and center the distal portion of a spring (not depicted).

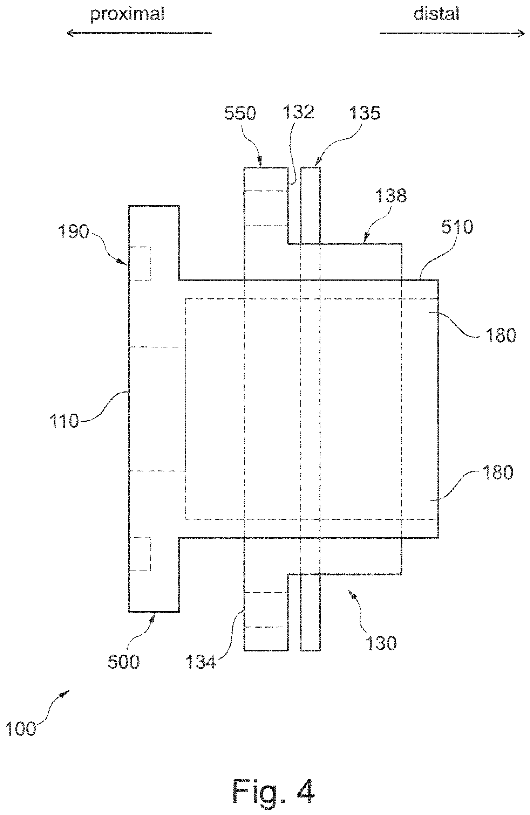

**Fig.** 4 depicts an enlarged and schematic side view of the spring-plate **100,** in this embodiment comprising at least two elements, the nut **500** and the coupling-ring **550.** Further, an optional ring **135** is indicated.

Nut **500** is shaped calicularly with the open part of the recess **180** at the distal side of the nut. Thread **110** at the proximal side of the nut **500** is configured to engage with the spring-strut-thread (see **Fig.** 3). One or more tool-recess(es) may be configured to enable a craftsman to tighten the nut **500** on the rod **900** and/or counter the nut **500** against the thread-adapter (depicted in **Fig.** 3). The outer part of the nut **500** can comprise a thread **510** configured to engage with an inner thread forming the inner part of the coupling-ring **550** (not depicted).

The coupling-ring **550** can comprise at least one recess or bore **134** that allows a craftsman to move the coupling-ring **550** along the thread **510.** The spring (not depicted) can be of a vast stiffness, the power needed to adjust the length (and thus the pre-tension) of the spring can be considerable and thus the coupling-ring **550** needs a definite possibility to apply such an extended force. An at least one recess and/or bore **134** can therefore be configured.

An optional ring **135** may be applied to smoothen the mechanical relation between the coupling-ring **550** when it is rotated to adjust the pre-tension of the spring (not depicted). Such a spring can comprise a sharp end that could harm the biasing portion **132** of the coupling-ring **550.**

The coupling-ring **550** can comprise a shaped shoulder **130** that is configured to support the spring (not depicted). The shoulder **130** can comprise two parts, the distal face **132** that biases the spring force, while the sheath **138** centers the spring (not depicted).

## Claims

1. A spring-plate (100) for a shock absorber, the spring-plate (100) being configured as a strut mount comprising a thread (110) configured to engage the thread of a spring-strut (910, 900) and further supporting and/or biasing a spring.

2. The spring-plate (100) according to claim 1, comprising a high-performance material with a tensile strength of at least 500 N/mm², most preferably about 650 N/mm².

3. The spring-plate (100) according to claim 1 or 2, the distal side of the spring-plate (100) comprising a ring-shaped shoulder (130) to support and/or bias a spring, the biasing portion (132) being adapted to supply a counter force to a spring and the supporting portion (138) being adapted to substantially center the spring.

4. The spring-plate (100) according to claim 1 to 3, the ring-shaped shoulder (130) being a separate part (550) configured to be adjustably-in-length to a nut (500), the nut (500) comprising a thread (110) configured to engage to a spring-strut (910).

5. A thread adapter (300) for a shock absorber, the thread adapter (300) countering a spring-plate (100) and comprising an inner thread (310) configured to engage a thread of the spring-strut (910) and/or an outer thread (320) configured to engage a thread (410) of a strut-eye (400).

6. The thread-adapter (300) according to claim 5, comprising a length (L) of at least 10 mm, preferably 16 mm and at most 30 mm.

7. A strut-eye (400) for a shock absorber, the strut-eye (400) comprising a thread (410) configured to engage the thread-adapter (300), further preferably comprising an eye (420) having a diameter of at least 18 mm, at most 24 mm and preferably 20 mm, the eye (420) preferably being configured to support a press-fit bush and/or a needle-bearing.

8. The strut-eye (400) according to claim 7 wherein the thread-adapter (300) according to any of the claims 5 to 6 is integrated and thus forms one integral part.

9. The strut-eye (400) according to claim 7 or 8 and a distance-washer (200) comprising a thickness of at least 1 mm and at most 10 mm, most preferably around 5 mm, being integrated and thus forming one integral part.

10. A kit (10) for a shock absorber, the kit (10) comprising at least one of
a. a spring-plate (100) according to any of the claims 1 to 4;
b. a thread-adapter (300) according to any of claims 5 to 6;
c. a strut-eye (400) according to any of the claims 7 to 9; and
optionally further comprising a ring (390) biasing and/or centering the distal end of a spring.

11. A method to assemble a kit (10) for a shock absorber, particularly according to claim 10, the assembly of the kit comprising the steps of
a. threading a spring-plate (100) onto the thread of a spring-strut (910);
b. threading a thread-adapter (300) onto the thread of the spring-strut (910) and counter the spring-plate (100);
c. threading a strut-eye (400) onto the outer thread of the thread-adapter (300); and
optionally comprising the step of arranging at least one distance-washer (200) comprising a thickness of at least 0.5 mm and at most 10 mm, most preferably around 5 mm between the spring-plate (100) and the strut-eye (400); and/or
optionally comprising the step of arranging a ring (390) biasing and/or centering the distal end of a spring.

12. The method to assemble the kit (10) for a shock absorber according to claim 11, the strut-eye (400) being integrated
a. with the assembly according to claim 8 and/or
b. with the assembly according to claim 9.

13. Use of a kit according to claim 10 for level-adjustment, preferably lowering the rear part of a motorcycle comprising a cantilever shock-absorbing system, preferably for at least one of
a. a Harley-Davidson Softail-model; and/or
b. a Harley-Davidson Dyna-model; and/or
c. a Harley-Davidson Touring-model; and/or
d. a Harley-Davidson Softail-Touring-model.

14. A shock-absorber assembly comprising at least one of
a. a shock-absorbing strut (900); and
b. a thread (910) of a shock-absorbing strut (900); and
c. a spring-plate (100) according to any of the claims 1 to 4; and
d. a strut-eye (400) according to any of the claims 7 to 9.

15. Use of a shock-absorber assembly according to claim 14 for level-adjusting, preferably lowering the rear part of a motorcycle comprising a cantilever shock absorbing system.
